Europäisches Patentamt

European Patent Office

Office européen des brevets

(19)

(11) Veröffentlichungsnummer: **0 139 914**

**A1**

(12) # EUROPÄISCHE PATENTANMELDUNG

(21) Anmeldenummer: **84109245.5**

(22) Anmeldetag: **03.08.84**

(51) Int. Cl.⁴: **G 11 B 5/127**
**G 11 B 5/02**

(30) Priorität: **19.08.83 DE 3330021**

(43) Veröffentlichungstag der Anmeldung:
**08.05.85 Patentblatt 85/19**

(84) Benannte Vertragsstaaten:
**DE FR GB IT**

(71) Anmelder: **Siemens Aktiengesellschaft**
**Berlin und München Wittelsbacherplatz 2**
**D-8000 München 2(DE)**

(72) Erfinder: **Schewe, Herbert, Dr.**
**Haydnstrasse 58**
**D-8522 Herzogenaurach(DE)**

(72) Erfinder: **Hillenbrand, Bernhard, Dr.**
**Esperstrasse 45**
**D-8521 Uttenreuth(DE)**

(72) Erfinder: **Diepers, Heinrich, Dr.**
**Veit-Stoss-Strasse 35**
**D-8552 Höchstadt(DE)**

(54) **Verfahren zur Speicherung von Informationen nach dem Prinzip der senkrechten Magnetisierung sowie Magnetkopf zur Durchführung des Verfahrens.**

(57) Bei Verfahren zur Speicherung von Informationen nach dem Prinzip der senkrechten Magnetisierung werden im allgemeinen längs einer Spur vorbestimmter Breite die Informationen in aufeinanderfolgenden Abschnitten vorbestimmter Ausdehnung in Längsrichtung der Spur mittels eines entsprechenden Magnetkopfes durch Magnetisierung der Speicherschicht eines geeigneten Aufzeichnungsmediums eingeschrieben. Um eine magnetische Flußführung zu einem zumindest weitgehend geschlossenen Kreis mit verhältnismäßig geringem magnetischen Widerstand zu ermöglichen, sieht die Erfindung vor, daß zwei parallele Teilspuren (8, 9) als Spur (7) geschrieben werden, so daß die Abschnitte (14) der Spur (7) jeweils zwei Teilabschnitte (15, 16) aufweisen, und daß die beiden Teilabschnitte (15, 16) jedes dieser Abschnitte (14) zueinander entgegengesetzt magnetisiert werden. Ein entsprechender Magnetkopf weist zwei magnetische Hauptpole auf, deren Polaritäten jeweils entgegengesetzt sind und die jeweils einer der beiden Teilspuren (8, 9) der Spur (7) zugeordnet sind.

FIG 2

SIEMENS AKTIENGESELLSCHAFT       Unser Zeichen
Berlin und München               VPA 83 P 3272 E

# Verfahren zur Speicherung von Informationen nach dem Prinzip der senkrechten Magnetisierung sowie Magnetkopf zur Durchführung des Verfahrens

Die Erfindung bezieht sich auf ein Verfahren zur Speicherung von Informationen nach dem Prinzip der senkrechten Magnetisierung in einem Aufzeichnungsmedium, das mit mindestens einer magnetisierbaren Speicherschicht versehen ist, welche ein magnetisch anisotropes Material enthält, dessen Achse leichter Magnetisierung senkrecht zur Oberfläche des Mediums ausgerichtet ist, bei welchem Verfahren längs einer Spur vorbestimmter Breite die Informationen in aufeinanderfolgenden Abschnitten vorbestimmter Ausdehnung in Längsrichtung der Spur mittels eines entsprechenden Magnetkopfes durch Magnetisierung der Speicherschicht eingeschrieben werden. Die Erfindung betrifft ferner einen Magnetkopf, mit dem dieses Verfahren durchzuführen ist.

Das Prinzip der senkrechten Magnetisierung zur Speicherung von Informationen ist allgemein bekannt (vgl. z.B. "IEEE Transactions on Magnetics", Vol. MAG-16, Nr. 1, Januar 1980, Seiten 71 bis 76 oder DE-OS 29 24 013). Für dieses Prinzip, das vielfach auch als vertikale Magnetisierung bezeichnet wird, sind Aufzeichnungsmedien wie beispielsweise eine starre Magnetspeicherplatte, eine flexible Einzelplatte (Floppy Disc) oder ein Magnetband erforderlich, die mindestens eine magnetisierbare Speicherschicht vorbestimmter Dicke aufweisen, welche ein magnetisch anisotropes Material wie z.B. aus einer CoCr-Legierung enthält, dessen Achse leichter Magnetisierung

Slm 2 Hag / 02.08.1982

senkrecht zur Oberfläche des Mediums gerichtet ist.
Mittels eines besonderen Schreibkopfes werden dann längs
einer Spur vorbestimmter Breite die einzelnen Informationen in aufeinanderfolgenden Abschnitten, auch Zellen oder
Blöcke genannt, durch Magnetisierung der Speicherschicht
eingeprägt. In der Praxis werden im allgemeinen die magnetischen Flußwechsel, d.h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich
zu der bei dem Verfahren der longitudinalen Speicherung
durch die Entmagnetisierung gegebenen Grenze wesentlich
kleiner sein, so daß sich mit dem Verfahren der senkrechten Magnetisierung die Informationsdichte vorteilhaft vergrößern läßt.

Bei diesem Verfahren der senkrechten Magnetisierung ergeben sich Probleme bei der Entwicklung eines entsprechenden Schreib-Lese-Kopfes. Bei einem solchen Kopf macht
vor allem die angestrebte Flußführung zu einem möglichst
geschlossenen Kreis mit geringem magnetischen Widerstand
Schwierigkeiten.

Ein entsprechender bekannter Schreib-Lese-Kopf weist
einen sogenannten Hauptpol auf, mit dem ein hinreichend
starkes senkrechtes Magnetfeld zum Ummagnetisieren der
einzelnen Abschnitte in der Speicherschicht erzeugt wird.
Der notwendige Rückschluß kann dann z.B. durch einen
Hilfspol auf der gegenüberliegenden Seite des Aufzeichnungsmediums erfolgen (vgl. die genannte Literaturstelle
"IEEE Trans.Magn.", vol. MAG-16). Daneben ist auch der
Rückschluß durch den Streufluß bekannt ("IEEE Transactions on Magnetics", vol. MAG-18, no. 6, November 1982,
Seiten 1170 bis 1172).

Ferner läßt sich ein Rückschluß auch mit einem besonderen Hilfspol vornehmen, der sich auf derselben Seite wie der Hauptpol befindet (vgl. "IEEE Transactions on Magnetics", vol. MAG-17, no. 6, November 1981, Seiten 3120 bis 3122 bzw. vol. MAG-18, no. 6, November 1982, Seiten 1158 bis 1163 oder die genannte DE-OS 29 24 013).

Dementsprechend enthält der aus der DE-OS 29 24 013 bekannte Schreib-Lese-Magnetkopf in Bewegungsrichtung des unter ihm hinwegbewegten Aufzeichnungsmediums gesehen auf seiner vorderen Stirnseite einen Hilfspol und auf seiner rückwärtigen Seite einen Hauptpol. Der Hauptpol besteht dabei im wesentlichen aus einem dünnen, senkrecht zur Bewegungsrichtung verlaufenden Polstück, das auf einem nichtmagnetischen Substrat aufgebracht ist. Der in Bewegungsrichtung wesentlich ausgedehntere Hilfspol auf der Vorderseite des Kopfes ist von dem Hauptpol über einen Luftspalt getrennt und setzt sich aus mehreren, senkrecht zur Bewegungsrichtung angeordneten dünnen Polstücken mit dazwischenliegenden Isolationsschichten zusammen. In dem Luftspalt zwischen dem Haupt- und Hilfspol liegt eine elektrische Wicklung, mit der für die Schreib-Funktion der Hauptpol erregt bzw. für die Lese-Funktion die Erregung des Hauptpols registriert werden kann. Der Hilfspol dient dabei in jedem Fall lediglich nur zur Flußrückführung. Der von der elektrischen Wicklung nicht ausgefüllte, dem Aufzeichnungsmedium zugewandte Restraum des Luftspaltes muß mit einer sogenannten isolierenden Spaltschicht gefüllt sein. Diese Spaltschicht soll aus möglichst hartem Material wie z.B. $Al_2O_3$ bestehen, um Auswaschungen zu vermeiden. Derartige Auswaschungen können nämlich zum Absturz des über dem Aufzeichnungsmedium fliegenden Magnetkopfes durch sich einlagernde Schmutzpartikel führen. Es hat sich jedoch gezeigt, daß die Herstellung dieser zwischen dem Hauptpol und dem Hilfspol liegenden Spaltschicht am Luftspalt außerordentlich schwierig ist.

Aufgabe der vorliegenden Erfindung ist es, das eingangs genannte Verfahren hinsichtlich der Magnetflußführung zu verbessern. Außerdem soll ein entsprechender Magnetkopf geschaffen werden, mit dem dieses Verfahren durchzuführen ist. Die erwähnten Schwierigkeiten herstellungstechnischer Art sollen dabei verringert sein.

Diese Aufgabe wird hinsichtlich des Verfahrens erfindungsgemäß dadurch gelöst, daß zwei parallele Teilspuren als Spur geschrieben werden, so daß die Abschnitte der Spur jeweils zwei Teilabschnitte aufweisen, und daß die beiden Teilabschnitte jedes dieser Abschnitte zueinander entgegengesetzt magnetisiert werden.

Die mit dieser Ausgestaltung des Verfahrens verbundenen Vorteile sind insbesondere darin zu sehen, daß eine optimierte Magnetflußführung auf verhältnismäßig einfache Weise ermöglicht wird. Diese Flußführung ist nämlich Teil des Speicherprinzips selbst, da der magnetische Fluß innerhalb des Abschnittes in diesen hinein- und aus diesem herausgeführt wird. Ohne Anwesenheit eines Kopfes schließt sich der magnetische Kreis durch einen definierten Streufluß oberhalb der Speicherschicht. Bei Anwesenheit eines Kopfes wird der Fluß außerhalb des Aufzeichnungsmediums zumindest weitgehend über diesen Kopf geschlossen. Gemäß dem besonderen Speicherprinzip beschränkt man sich pro geschriebener Information auf den entsprechenden Abschnitt der Speicherschicht des Aufzeichnungsmediums. Darüber hinaus bedingt das erfindungsgemäße Verfahren konstruktiv nur wenig aufwendige Schreib- und Lese-Köpfe.

Ein Magnetkopf zur Durchführung des erfindungsgemäßen Verfahrens ist dadurch gekennzeichnet, daß er zwei magnetische Hauptpole enthält, deren Polaritäten jeweils entgegengesetzt sind und die jeweils einer der beiden Teilspuren zugeordnet sind. Dabei haben die beiden Pole, deren gedachte Verbindungslinie somit quer zur Längsrichtung der Spur bzw. Bewegungsrichtung des Magnetkopfes liegt, die gleiche Polstärke, d.h. sie führen den gleichen Magnetfluß. Auch die magnetischen Flußdichten der Pole sollen vorteilhaft weitgehend gleich sein, so daß die Pole dann gleiche Flächen aufweisen. Die Vorteile eines solchen Magnetkopfes sind insbesondere darin zu sehen, daß ein planarer Aufbau ermöglicht wird, der verhältnismäßig einfach durchzuführen ist. Ausserdem werden durch den damit bedingten quasi symmetrischen Aufbau beide Pole zum Lesen bzw. Schreiben herangezogen. Hierbei entfällt der bei den bisher bekannten Lösungen vorgesehene Hilfspol, der ein unerwünschtes Lesen bzw. Schreiben an der ablaufenden Kante möglich machte.

Weitere vorteilhafte Ausgestaltungen des Verfahrens bzw. des Magnetkopfes gehen aus den übrigen Unteransprüchen hervor.

Zur weiteren Erläuterung der Erfindung wird auf die Zeichnung Bezug genommen, in deren Figur 1 eine nach bekannten Verfahren der senkrechten Magnetisierung beschriebene Spur veranschaulicht ist. Figur 2 zeigt eine entsprechende nach dem erfindungsgemäßen Verfahren beschriebene Spur, während aus Figur 3 ein Magnetkopf zur Durchführung des erfindungsgemäßen Verfahrens hervorgeht.

0139914

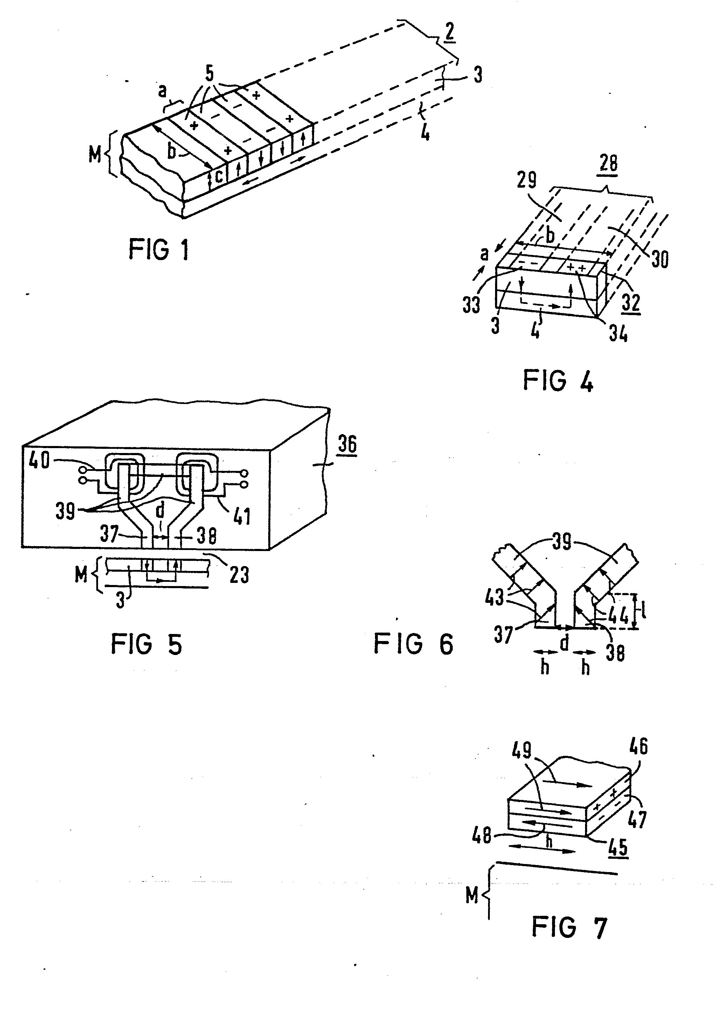

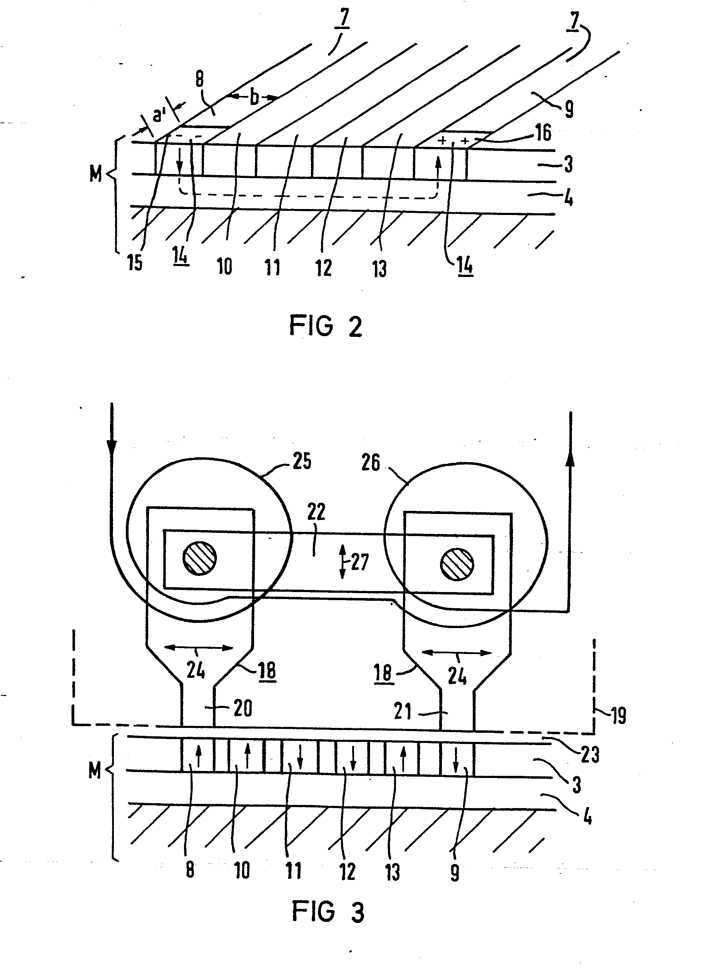

In Figur 4 ist eine weitere erfindungsgemäß beschriebene Spur veranschaulicht, während in den Figuren 5 bis 7 ein entsprechender Magnetkopf bzw. Teile dieses Kopfes angedeutet sind. In den Figuren sind entsprechende Teile mit denselben Bezugszeichen versehen.

In Figur 1 ist als Schrägansicht ein an sich bekannter Ausschnitt aus einer Spur 2 in einem Aufzeichnungsmedium M, z.B. einer Magnetspeicherplatte, schematisch veranschaulicht. Das Aufzeichnungsmedium weist eine Speicherschicht 3, insbesondere aus einer CoCr-Legierung auf, welche eine vorbestimmte Dicke c hat. Diese Schicht kann auf ihrer einem in der Figur nicht dargestellten Schreib-Lese-Kopf abgewandten Rückseite von einer weichmagnetischen Schicht 4, z.B. aus einer speziellen NiFe-Legierung, abgedeckt sein. In der Spur 2 mit einer vorbestimmten Breite b ist ein Bit-Muster eingespeichert, wie es sich mit bekannten Vorrichtungen und Verfahren zur Speicherung nach dem Prinzip der senkrechten Magnetisierung ergibt. In der Figur ist nur ein Teilstück dieses Musters aufgeführt, wobei jeder ein einzelnes Bit beinhaltende Abschnitt 5 der Spur eine Ausdehnung a in Längsrichtung der Spur aufweist. Diese Ausdehnung wird auch als Wellenlänge bezeichnet. Ein Bit stellt somit einen senkrecht zur Schichtebene magnetisierten Block bzw. eine Zelle der Abmessungen a x b x c dar. Der Unterschied zwischen 0 und 1 wird im einfachsten Fall durch verschiedene Ausrichtungen der Magnetisierungen in einem Bit-Abschnitt dargestellt. Bei einem Bit-Wechsel kehrt der magnetische Fluß sein Vorzeichen um. Praktisch werden im allgemeinen andere Codierungen der 0 und 1 vorgenommen. Die jeweilige Magnetisierungseinrichtung ist in der Figur durch gepfeilte Linien veranschaulicht. Der magnetische Fluß wird auf der Unterseite der Schicht 3 durch die dort vielfach vorgesehene, aber nicht immer erforderliche weichmagnetische Schicht 4 zu benachbarten, entgegengesetzt magnetisierten Bit-Abschnitten geführt.

Aus Figur 2 geht eine Spur in einem entsprechenden Aufzeichnungsmedium hervor, das gemäß dem Verfahren nach der Erfindung magnetisiert sein soll. Im Gegensatz zu der Spur 2 nach Figur 1, die jeweils nur Abschnitte mit einheitlicher Magnetisierung aufweist, enthält erfindungsgemäß die allgemein mit 7 bezeichnete Spur zwei parallelliegende Teilspuren 8 und 9 unterschiedlicher Magnetisierung. Die Teilspuren können dabei z.B. jeweils die Breite b der bekannten Spur 2 nach Figur 1 aufweisen und außerdem durch weitere entsprechende Teilspuren 10 bis 13 anderer Spuren voneinander getrennt sein. Jeder der Spur 7 zuzuordnende, mit 14 bezeichnete Speicherabschnitt setzt sich folglich aus zwei parallelliegenden Teilabschnitten 15 und 16 zusammen. Diese Teilabschnitte 15 und 16 jedes Abschnittes 14 sollen erfindungsgemäß zueinander entgegengesetzt magnetisiert sein. Das heißt, in der Speicherschicht 3 sind in jedem Abschnitt 14 zwei quer zur Längsrichtung der Spur liegende Teilabschnitte 15 und 16 vorhanden, in denen die senkrecht zur Oberfläche der Spur gerichtete Magnetisierung verschiedenes Vorzeichen hat. Dabei wird die durch eine gepfeilte Linie angedeutete Magnetisierung in jedem einzelnen Speicherabschnitt 14 auf der Rückseite der Speicherschicht 3 geschlossen. Zur Schließung der Magnetisierung auf dieser Rückseite kann vorteilhaft eine dort vorzusehende Schicht 4 aus weichmagnetischem Material dienen.

Im allgemeinen ist gegenüber dem Stand der Technik gemäß Figur 1 keine Verringerung der Speicherdichte des Aufzeichnungsmediums M, beispielsweise der Magnetspeicherplatte erforderlich. Trotz der Verwendung von zwei Teilspuren 8 und 9 mit jeweils einer Querausdehnung, die z.B. die Größe b hat, kann nämlich das gleiche magnetisierte Volumen pro Bit zur Verfügung stehen, indem die longitudinale Bitdichte halbiert wird, d.h., daß die Ausdehnung a'
der beiden Teilabschnitte 8 und 9 in Längsrichtung der
Spur 7 etwa die Hälfte der Ausdehnung a nach Figur 1 beträgt. Daneben ist auch eine Halbierung der Zeilendichte
pro Bit, d.h. der Querausdehnung b möglich. Bei diesen
Maßnahmen ist wegen der optimierten Magnetflußführung eine
Signalreduzierung gegenüber dem Stand der Technik nicht
zu erwarten.

Das erfindungsgemäße Speicherprinzip sieht also die
Schließung des Magnetflusses pro einzelnen Bit-Abschnitt
14 vor. Unterschiedliche Bits (0 oder 1) in verschiedenen
Abschnitten 14 werden dann durch unterschiedliche Richtungen des Magnetflusses in diesen Abschnitten wiedergegeben.

Dieses erfindungsgemäße Speicherprinzip führt auch zu
einer technologisch verhältnismäßig einfachen Ausbildung
der Schreib- und/oder Lese-Köpfe. Ein vereinfachtes Ausführungsbeispiel eines entsprechenden Kopfes, insbesondere zum Einspeichern von Informationen, ist in Figur 3
als Vorderansicht schematisch dargestellt. Dieser allgemein mit 18 bezeichnete Kopf soll sich an der Stirn- oder
Rückseite eines gebräuchlichen, als Flugkörper bezeichneten Trägerkörpers 19 befinden und weist zwei nebeneinanderliegende, gleichberechtigte Hauptpole 20 und 21 auf.
Die gedachte Verbindungslinie zwischen diesen beiden Polen
liegt somit quer zur Bewegungsrichtung des Magnetkopfes,
d.h. quer zur Längsrichtung der Spuren in dem Aufzeichnungs
medium. Die beiden Pole haben gleiche Polstärke. Ihre
magnetischen Flußdichten sollen weitgehend gleich sein,
d.h. die Pole weisen dann gleiche Flächen auf. Dagegen
können die Polformen prinzipiell verschieden sein, wenn
auch gleiche Formen bevorzugt sind. Der magnetische Fluß
zwischen den beiden Polen 20 und 21 wird durch einen
Verbindungsschenkel 22 aus weichmagnetischem Material geführt.

Bei der Herstellung des Magnetkopfes wird ein Substrat verwendet, das z.B. aus TiC und $Al_2O_3$ besteht. Falls erforderlich, kann das Substrat mit einer hinreichend dicken Isolationsschicht z.B. aus $Al_2O_3$ versehen werden. Zunächst werden dünne Magnetschichten aus speziellen NiFe-Legierungen wie Permalloy (Ni/Fe-81/19) oder aus FeB durch Sputtern, Aufdampfen oder galvanische Abscheidung aufgebracht und durch eine nicht-magnetische Zwischenlage aus z.B. $SiO_2$ oder $Al_2O_3$ voneinander getrennt. Die Magnetisierung der Magnetschichten liegt in der Schichtebene. Durch den Herstellungsprozeß bedingt weisen die Magnetschichten eine uniaxiale Anistropie auf, d.h., daß die Magnetschicht zwei um $90^o$ gedrehte Anisotropieachsen aufweist, die als leichte oder schwere Richtung bezeichnet werden. Die Magnetisierung liegt bevorzugt parallel zur leichten Richtung. Die leichte Richtung der Magnetschicht kann z.B. beim Aufbringen der Schicht durch ein angelegtes Magnetfeld induziert werden.

Die aufgewachsenen, unterschiedlichen Schichten werden durch an sich bekannte Techniken wie Fotolithografie, Plasma-, Ionenstrahl- oder naßchemisches Ätzen strukturiert und damit die beiden Pole des Magnetkopfes hergestellt. Die durch gepfeilte Linien 24 angedeutete leichte Richtung der Magnetschichten 20 und 21 liegt hierbei parallel zur Speicherschicht 3. Nach Fertigstellung der Pole wird eine Isolationsschicht z.B. aus $SiO_2$ oder $Al_2O_3$ aufgebracht und werden anschließend die zum Ein- und/oder Auslesen der Daten in der Magnetspeicherschicht 3 des Aufzeichnungsmediums erforderlichen hintereinandergeschalteten Spulen 25 und 26 strukturiert. Diese Spulen bestehen z.B. aus Cu, Au oder Al. Der als magnetische Verbindung zwischen beiden Polen 20 und 21 dienende Verbindungsschenkel 22 besteht z.B. aus lamellierten Magnetschichten, deren durch eine gepfeilte Linie 27 angedeutete leichte Richtung senkrecht zur Magnetspeicherschicht 3 orientiert ist. Somit liegt die Richtung der leichten Magnetisierung in den flußführenden Teilen des Magnetkopfes vorteilhaft im wesentlichen immer senkrecht zur Flußführungsrichtung. Da unebene Magnetschichten eine Verschlechterung ihrer magnetischen Eigenschaften aufweisen, können gegebenenfalls die Spulen 25 und 26 in bekannter Weise mittels Polyimid-Lack eingeebnet werden. Schließlich wird zum Schutz des Dünnschicht-Magnetkopfes noch eine dicke Protektionsschicht z.B. aus $Al_2O_3$ aufgebracht.

Bei dem Ausführungsbeispiel gemäß den Figuren 2 und 3 wurde davon ausgegangen, daß zwischen benachbarten Teilspuren 8 und 9 einer Spur 14 jeweils mehrere Teilspuren, z.B. die Teilspuren 10 bis 13, anderer Spuren liegen. Gemäß der Erfindung ist es jedoch auch möglich, daß zwei unmittelbar nebeneinanderliegende Teilspuren beschrieben werden. Eine entsprechende Spur ist in Figur 4 als Schrägansicht veranschaulicht und allgemein mit 28 bezeichnet. Sie weist zwei nebeneinanderliegende Teilspuren 29 und 30 auf, die in jedem mit 32 bezeichneten Speicherabschnitt entgegengesetzt magnetisiert sind. Dabei sind die Teilabschnitte entgegengesetzter Magnetisierung des Abschnittes 32 mit 33 bzw. 34 bezeichnet. Die Spur 28 kann z.B. die Breite b der Spur 2 nach Figur 1 gemäß dem Stand der Technik aufweisen. Auch jeder einzelne Abschnitt 32 kann in Längsrichtung der Spur die Ausdehnung a haben, wie sie beim Stand der Technik nach Figur 1 vorgesehen wird.

Ein für die Spur 28 gemäß Figur 4 vorzusehender Magnetkopf geht aus Figur 5 als Schrägansicht hervor und ist mit 36 bezeichnet. Seine beiden Hauptpole 37 und 38 sind über einen Leitkörper 39 aus weichmagnetischem Material so verbunden, daß eine oder zwei beispielsweise

- 11 -    VPA    83 P 3272 E

planare Spulen 40 bzw. 41 mit der erforderlichen Windungszahl untergebracht werden können.

Jedoch sind bei dem Magnetkopf 36, dessen Polausführung
in Figur 6 als Teilansicht der Figur 5 näher veranschaulicht ist, der magnetische Nebenschluß durch Streufluß
zwischen den um einen Betrag d beabstandeten Hauptpolen
37 und 38 und die magnetische Struktur dieser verhältnismäßig schmal mit einer Breite h ausgeführten Pole zu berücksichtigen. Nebenschlußprobleme ergeben sich praktisch
bei allen Magnetköpfen. Wegen der verhältnismäßig geringen
Dicke des den Magnetfluß führenden Leitkörpers 39 in der
Größenordnung von 1 /um und der ebenfalls geringen Länge l
der Pole 37 und 38 ist jedoch der Querschnitt für den
Streufluß vergleichsweise gering zu halten. Der zulässige
Mindestabstand d der Hauptpole 37 und 38 wird dabei von
dem kleinsten erforderlichen Nutzfluß festgelegt. Werden
die Hauptpole 37 und 38 sehr schmal ausgeführt, so kann
die Ausbildung der leichten Magnetisierungsrichtung, die
gemäß dem Prinzip der senkrechten Magnetisierung in einer
Schichtebene senkrecht zur Flußrichtung liegen soll,
Schwierigkeiten bereiten, da ein entmagnetisierendes Feld
die Magnetisierung in Flußrichtung zu drehen versucht.
Hier kann Abhilfe durch eine oder mehrere der folgenden
Maßnahmen getroffen werden:

1. Durch Verkürzung der Pollänge l kann ein Gegenfeld
   aufgebaut werden.
2. Wie in Figur 6 durch gepfeilte Linien 43 und 44 angedeutet sein soll, kann durch Schräglage der leichten
   Magnetisierungsrichtung in dem weichmagnetischen Material des Flußleitkörpers 39 und in den Polen 37 und
   38 das entmagnetisierende Feld verringert werden.
3. Darüber hinaus können die Pole doppellagig ausgebildet
   werden, um so eine quasi geschlossene Flußstruktur zu
   erhalten. Eine entsprechende Ausbildung eines Magnetpoles 45 ist in der Schrägansicht der Figur 7 schematisch angedeutet. Dieser Pol weist zwei Lagen 46 und 47 auf, deren durch gepfeilte Linien 48 und 49 veranschaulichten Magnetisierungen untereinander entgegengesetzt und parallel zu der Oberfläche des Aufzeichnungsmediums M gerichtet sind. Unter Umständen ist es möglich, mit so geringen Polquerschnitten zu arbeiten, daß sich überhaupt keine Domänen mehr ausbilden können. Der dabei reduzierte Nutzfluß kann gegebenenfalls durch ein Speichermaterial mit höherer Sättigungsmagnetisierung ausgeglichen werden.

Weiter hilft auch eine höhere Windungszahl und ein kleiner magnetischer Kreiswiderstand. Der üblicherweise verwendete Chromzusatz zum Kobalt der Speicherschicht 3 dient dazu, die Sättigungsmagnetisierung und damit das entmagnetisierende Feld herabzusetzen. Beim erfindungsgemäßen Speicherprinzip ist jedoch der Entmagnetisierungsfaktor immer, auch bei Folge vieler gleicher Bits klein. Deshalb kann man gegebenenfalls auch unverdünntes Kobalt für die Speicherschicht verwenden.

Bei den Erläuterungen zu den Figuren 3 bis 7 wurde davon ausgegangen, daß die Magnetköpfe 18 und 36 zur Einspeicherung von Informationen in ein Aufzeichnungsmedium gemäß dem erfindungsgemäßen Verfahren dienen soll. Es ist jedoch ebensogut möglich, diese Köpfe zum Herauslesen der entsprechend eingespeicherten Informationen zu verwenden.

14 Patentansprüche
7 Figuren

Patentansprüche

1. Verfahren zur Speicherung von Informationen nach dem Prinzip der senkrechten Magnetisierung in einem Aufzeichnungsmedium, das mit mindestens einer magnetisierbaren Speicherschicht versehen ist, welche ein magnetisch anisotropes Material enthält, dessen Achse leichter Magnetisierung senkrecht zur Oberfläche des Mediums ausgerichtet ist, bei welchem Verfahren längs einer Spur vorbestimmter Breite die Informationen in aufeinanderfolgenden Abschnitten vorbestimmter Ausdehnung in Längsrichtung der Spur mittels eines entsprechenden Magnetkopfes durch Magnetisierung der Speicherschicht eingeschrieben werden, d a d u r c h   g e k e n n z e i c h n - n e t ,  daß zwei parallele Teilspuren (8, 9; 29, 30) als Spur (7; 28) geschrieben werden, so daß die Abschnitte (14; 32) der Spur (7; 28) jeweils zwei Teilabschnitte (15, 16; 33, 34) aufweisen, und daß die beiden Teilabschnitte (15, 16; 33, 34) jedes dieser Abschnitte (14; 32) zueinander entgegengesetzt magnetisiert werden.

2. Verfahren nach Anspruch 1, d a d u r c h   g e - k e n n z e i c h n e t ,  daß die Teilspuren (8, 9) der Spur (7) so beabstandet geschrieben werden, daß zwischen ihnen weitere Teilspuren (10 bis 13) anderer Spuren zu liegen kommen (Fig. 2).

3. Verfahren nach Anspruch 1, d a d u r c h   g e - k e n n z e i c h n e t ,  daß die Teilspuren (29, 30) der Spur (28) nebeneinanderliegend geschrieben werden (Fig. 4).

4. Magnetkopf zur Durchführung des Verfahrens nach Anspruch 2 oder 3, g e k e n n z e i c h n e t  durch zwei magnetische Hauptpole (20, 21; 37, 38), deren Polaritäten jeweils entgegengesetzt sind und die jeweils einer der beiden Teilspuren (8, 9; 29, 30) der Spur (7; 28) zugeordnet sind.

5. Magnetkopf nach Anspruch 4, d a d u r c h   g e - k e n n z e i c h n e t , daß die beiden Pole (20, 21; 37, 38) magnetische Flußdichten haben, deren Beträge zumindest annähernd gleich sind.

6. Magnetkopf nach Anspruch 4 oder 5, d a d u r c h g e k e n n z e i c h n e t , daß zwischen den Hauptpolen (20, 21) ein im wesentlichen quer zu ihnen angeordneter Verbindungsschenkel (22) zur Führung des Magnetflusses vorgesehen ist.

7. Magnetkopf nach einem der Ansprüche 4 bis 6, d a - d u r c h   g e k e n n z e i c h n e t , daß zumindest teilweise seine den Magnetfluß führenden Teile (Pole 20, 21; 37, 38; Verbindungsschenkel 22; Leitkörper 39) als Dünnfilm-Strukturen auf einem ebenen Substratkörper aufgebracht sind.

8. Magnetkopf nach einem der Ansprüche 4 bis 7, d a - d u r c h   g e k e n n z e i c h n e t , daß zumindest teilweise seine den Magnetfluß führenden Teile (Pole 20, 21; 37, 38; Verbindungsschenkel 22; Leitkörper 39) aus weichmagnetischem Material bestehen.

9. Magnetkopf nach Anspruch 7 oder 8, d a d u r c h g e k e n n z e i c h n e t , daß die Pole (37, 38) die dem Aufzeichnungsmedium (M) zugewandten Enden eines den magnetischen Fluß in dem Magnetkopf (36) führenden Leitkörpers (39) sind.

10. Magnetkopf nach einem der Ansprüche 4 bis 9, d a - d u r c h   g e k e n n z e i c h n e t , daß seine Pole (20, 21; 45) aus einem Material bestehen, dessen

0139914

leichte Magnetisierung (24; 48) zumindest weitgehend parallel zur Oberfläche des Aufzeichnungsmediums (M) gerichtet ist.

11. Magnetkopf nach Anspruch 10, d a d u r c h g e - k e n n z e i c h n e t , daß die Pole (45) zwei Lagen 46, 47) aus Materialien aufweisen, deren Magnetisierungen (48, 49) untereinander entgegengesetzt gerichtet sind (Fig. 7).

12. Magnetkopf nach Anspruch 6, d a d u r c h g e - k e n n z e i c h n e t , daß der Verbindungsschenkel (22) aus einem Material besteht, dessen leichte Magnetisierung (27) zumindest weitgehend senkrecht zur Oberfläche des Aufzeichnungsmediums (M) gerichtet ist.

13. Magnetkopf nach einem der Ansprüche 4 bis 9, d a - d u r c h g e k e n n z e i c h n e t , daß zumindest die Pole (37, 38) aus einem Material bestehen, das eine leichte Magnetisierung (43, 44) aufweist, die schräg bezüglich der Oberfläche des Aufzeichnungsmediums (M) gerichtet ist (Fig. 6).

14. Verwendung des Magnetkopfes nach einem der Ansprüche 4 bis 13 zum Herauslesen der nach dem Verfahren gemäß einem der Ansprüche 1 bis 3 in das Aufzeichnungsmedium (M) eingespeicherten Informationen.

FIG 1

FIG 4

FIG 5

FIG 6

FIG 7

FIG 2

FIG 3

**EUROPÄISCHER RECHERCHENBERICHT**

EP  84 10 9245

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 107 589  (CII HONEYWELL BULL) <br> * Seite 12, Zeile 1 - Seite 16, Zeile 28; Figuren 4,5 * | 1,3-5, 7,9,10 | G 11 B  5/127 <br> G 11 B  5/02 |
| | --- | | |
| Y | IBM TECHNICAL DISCLOSURE BULLETIN, vol. 26, no. 1, June 1983, New York, USA A.W. VINAL "Twin track magnetic read/write head", Seiten 357-360 <br> * Gesamtes Dokument * | 1,3-5, 7-9 | |
| | --- | | |
| D,Y | DE-A-2 924 013  (CII HONEYWELL BULL) <br> * Seite 10, Absatz 2 - Seite 11, Absatz 3; Figuren 1A,1B * | 1,3-5, 7-9 | |
| | --- | | RECHERCHIERTE SACHGEBIETE (Int. Cl.4) |
| P,A | EP-A-0 098 358  (IBM) <br> * Seite 9, Absätze 1-4; Ansprüche; Figuren 3A-D * | 1,3 | G 11 B  5/00 |
| | --- | | |
| A | Patent Abstracts of Japan, vol. 7, nO. 30, 5. Februar 1983; & JP-A-57-183615 (RICOH K.K.) 12-11-1982 | 1,4-9, 14 | |
| | --- | | |
| A | US-A-4 300 178  (SAITOU et al.) <br> * Zusammenfassung * | 2 | |
| | ----- | | |

Der vorliegende Recherchenbericht wurde für alle Patentansprüche erstellt.

| Recherchenort <br> BERLIN | Abschlußdatum der Recherche <br> 08-11-1984 | Prüfer <br> WIBERGH S.R. |
|---|---|---|